# EUROPÄISCHE PATENTSCHRIFT

(11) **EP 3 877 233 B1**
(45) Veröffentlichungstag und Bekanntmachung des Hinweises auf die Patenterteilung: **21.12.2022**
(21) Anmeldenummer: 19801267.6
(22) Anmeldetag: 06.11.2019
(51) Int. Cl.: B61C 9/14

(54) **RADSATZGETRIEBE FÜR EIN SCHIENENFAHRZEUG**
WHEELSET TRANSMISSION FOR A RAIL VEHICLE
TRANSMISSION POUR UN VÉHICULE FERROVIAIRE

(30) Priorität: 07.11.2018 DE 102018218974
(43) Veröffentlichungstag der Anmeldung: 15.09.2021
(73) Patentinhaber: ZF Friedrichshafen AG, 88046 Friedrichshafen (DE)
(72) Erfinder: KETTLITZ, Mario, 88250 Weingarten (DE); RECHENBACH, Philipp, 88677 Markdorf (DE); NIEDERMEIER, Hans-Peter, 88085 Langenargen (DE); SPÜHLER, Stefan, 88677 Markdorf (DE); GUERRA, Fabio, 88048 Friedrichshafen (DE)
(74) Vertreter: ZF Friedrichshafen AG
(86) Internationale Anmeldenummer: PCT/EP2019/080340
(87) Internationale Veröffentlichungsnummer: WO 2020/094692

(56) Entgegenhaltungen:
- EP-A1- 0 079 455
- EP-A2- 2 202 124
- DE-C- 312 027
- DE-C- 857 387
- DE-U- 7 534 103
- GB-A- 628 453
- US-A- 2 102 755

## Beschreibung

Die Erfindung betrifft ein Radsatzgetriebe für ein Schienenfahrzeug. Derartige Radsatzgetriebe mit einem Kegelradgetriebe sind erforderlich um ein Antriebsdrehmoment und eine Antriebsbewegung von einer in Fahrtrichtung verlaufenden Antriebswelle auf die quer zur Fahrtrichtung verlaufende Radsatzwelle zu übertragen. Derartige Radsatzgetriebe können als einstufige Hypoid- oder Kegelradgetriebe ausgeführt sein.

In der EP 2 098 432 A1 wird vorgeschlagen die Fahrtrichtungsumkehr mithilfe eines separaten Umkehrgetriebes zu realisieren, wobei das separate Umkehr- bzw. Wendegetriebe entfernt von dem ungefederten Radsatzgetriebe und stattdessen im gefederten Bereich des Antriebsstranges eines Schienenfahrzeugs aufgehängt sein soll. Das Radsatzgetriebe kann dadurch insbesondere im Vergleich zu Radsatzwendegetrieben leichter ausgeführt werden, wodurch Schwingungsprobleme vermieden werden.

Die EP 0 079 455 A1 offenbart ein Radsatzgetriebe mit einem Kegelritzel und einem starr auf einer Radsatzwelle angeordneten Tellerrad.

Es ist die Aufgabe der vorliegenden Erfindung ein verbessertes Radsatzgetriebe für ein Schienenfahrzeug zu schaffen, das sich für ein breites Anwendungsspektrum eignet und einen zuverlässigen und energiesparenden Betrieb des Schienenfahrzeugs ermöglicht.

Diese Aufgaben werden gelöst durch ein Radsatzgetriebe für ein Schienenfahrzeug gemäß Anspruch 1. Vorteilhafte Ausführungen sind in den jeweiligen abhängigen Ansprüchen angegeben.

Demnach wird ein Radsatzgetriebe für ein Schienenfahrzeug beansprucht, wobei das Radsatzgetriebe ein starr auf einer Ritzelwelle angeordnetes Kegelritzel und ein starr auf einer Radsatzwelle angeordnetes Tellerrad aufweist, die miteinander im Eingriff sind. So kann die Antriebsleistung von der Ritzelwelle über das Kegelritzel und das Tellerrad auf die Radsatzwelle übertragen werden. Die Ritzelwelle ist zumindest annähernd in Fahrtrichtung ausgerichtet, während die Radsatzwelle quer zur Fahrtrichtung verläuft. Die Radsatzwelle kann beispielsweise rechtwinklig zu der Ritzelwelle angeordnet sein. Ferner ist vorgesehen, dass das Radsatzgetriebe eine koaxial zu der Ritzelwelle angeordnete Eingangswelle umfasst, und dass zwischen der Eingangswelle und der Ritzelwelle eine Schaltkupplung angeordnet ist.

Mithilfe der Schaltkupplung ist es möglich den Antriebsstrang des Schienenfahrzeugs nahe an der Radsatzwelle mechanisch zu trennen. Dadurch sind zusätzliche Betriebszustände eines zugeordneten Schienenfahrzeugs und eines zugeordneten Zuges aus mehreren antreibbaren Schienenfahrzeugen möglich.

Bei Schienenfahrzeugen und Zügen mit mehreren Antrieben können mithilfe der Schaltkupplung in den Radsatzgetrieben einzelne Antriebe ausgekuppelt werden, wenn nicht die volle Zugkraft oder Antriebsleistung aller Antriebe erforderlich ist. Die verbleibenden Antriebe können dann beispielsweise mit einem besseren Wirkungsgrad betrieben werden, sodass sich eine Energieeinsparung ergibt. Dadurch, dass der Antriebsstrang sehr nahe der Radsatzwelle getrennt wird, müssen beim Abschleppen bzw. Mitschleppen nur sehr wenige Elemente des ausgekuppelten Antriebsstrangs mitgeschleppt werden. Das heißt, dass weniger Massen beschleunigt und abgebremst werden müssen. Dadurch kann der Energieverbrauch auch im Abschleppbetrieb reduziert werden.

Die Möglichkeit den Radsatz bzw. die Radsatzwelle mithilfe der Schaltkupplung vom Rest des Antriebsstrangs mechanisch zu trennen ermöglicht weitere Vorteile. Beispielsweise können bestimmte Schienenbaufahrzeug wie ein Gleisbaufahrzeug durch den eigenen Antriebsstrang nur mit geringen Geschwindigkeiten angetrieben werden. Zum Überführen von einer Baustelle auf eine weiter entfernte andere Baustelle werden derartige Schienenbaufahrzeuge deshalb häufig in schneller Fahrt von einem anderen Zugfahrzeug geschleppt. Mit einem erfindungsgemäßen Radsatzgetriebe kann ein derartiges Schienenbaufahrzeug bei getrenntem Antriebsstrang in schneller Fahrt abgeschleppt werden, ohne dass Überdrehzahlen im Antriebsstrang des Schienenbaufahrzeugs entstehen.

Insbesondere im Vergleich zu Radsatzwendegetrieben, die zusätzliche Getriebeteile und Schaltelemente zur Drehrichtungsumkehr erfordern, kann ein derartiges Radsatzgetriebe kompakt aufgebaut sein und eine geringere Masse aufweisen, weil es als einfaches, einstufiges Hypoid- oder Kegelradgetriebe ausgeführt ist. Die koaxiale Anordnung der Eingangswelle gegenüber der Ritzelwelle gemäß der vorliegenden Erfindung ermöglicht geringe Abmessungen insbesondere in vertikaler Richtung, was angesichts des sehr begrenzten Bauraums im Unterbau eines Schienenfahrzeugs besonders vorteilhaft ist.

Vorzugsweise ist vorgesehen, dass die Schaltkupplung eine axial verschiebbare Schiebemuffe aufweist, mit der die Eingangswelle und die Ritzelwelle miteinander verbindbar sind. Im eingekuppelten Zustand wird also das Antriebsmoment von der Eingangswelle über die Schiebemuffe auf die Ritzelwelle übertragen. Eine solche Schiebemuffe kann insbesondere eine Innenverzahnung aufweisen, die mit einer Schaltverzahnung auf der Eingangswelle oder der Ritzelwelle dauernd in Eingriff ist und mit einer weiteren Schaltverzahnung auf der anderen der beiden Wellen durch axiales Verschieben in Eingriff gebracht werden kann. Solche formschlüssigen Schaltkupplungen haben sich in einer Vielzahl von Anwendungen als robuste und langlebige Kupplungen bewährt, wobei sie bei kompakter Bauweise verhältnismäßig hohe Drehmomente übertragen können. Die kompakte Bauweise trägt wiederum zu einer geringen Masse des Radsatzgetriebes bei, wodurch die ungefederten Massen des Schienenfahrzeugs vorteilhaft reduziert sind.

In einer weiteren bevorzugten Ausführung umfasst das Radsatzgetriebe einen Aktuator zur Betätigung der Schaltkupplung, der mittels zumindest eines Schaltelements mit der Schiebemuffe verbunden ist. Der Aktuator kann von einer Steuereinrichtung elektronisch ansteuerbar sein, sodass der Schaltzeitpunkt und der Schaltvorgang elektronisch steuerbar sind. Der Aktuator kann beispielsweise pneumatisch oder hydraulisch betätigbar sein und einen entsprechenden Druckzylinder umfassen. Der Aktuator kann aber auch elektrisch bzw. elektromagnetisch betätigt sein. Das genannte Schaltelement kann insbesondere als Schaltgabel ausgestaltet sein, deren Gabelarme sich in den Bereich einer Umfangsnut an der Schiebemuffe erstrecken. In der Umfangsnut können Gleitstücke angeordnet sein, die beweglich mit den Gabelarmen der Schaltgabel verbunden sind.

Bevorzugt ist der Aktuator außen an einem Gehäuse des Radsatzgetriebes befestigt, wodurch insbesondere dessen Schnittstellen leicht zugänglich sind. Das genannte Schaltelement oder ein Übertragungselement können sich von dem Aktuator durch eine Öffnung in dem Gehäuse des Radsatzgetriebes hindurch zu der Schaltkupplung im Innenraum des Gehäuses erstrecken.

Die Eingangswelle und die Ritzelwelle sind entweder unmittelbar oder über andere Bauteile in dem Gehäuse des Radsatzgetriebes gelagert. Insbesondere die Ritzelwelle muss aufgrund der in dem Kegelradgetriebe auftretenden erheblichen Axialkräfte in Wälzlagern gelagert werden, welche für die Aufnahme derartiger Axialkräfte geeignet sind. Vorteilhaft kann die Ritzelwelle mittels zweier Kegelrollenlager in dem Gehäuse gelagert werden, wobei die Kegelrollenlager in einer O-Anordnung angeordnet sind. Eine solche O-Anordnung ermöglicht eine besonders starre Lagerung und wegen des großen Abstands zwischen den wirksamen Lagermitten eignet sich diese Anordnung auch besonders gut für das Aufnehmen von Momentbelastungen die im Betrieb auf die Ritzelwelle wirken. Die Eingangswelle kann insbesondere zur Aufnahme der antriebsseitigen radialen Belastungen mittels geeigneter Wälzlager in dem Gehäuse gelagert werden. An ihrem abtriebsseitigen Ende kann die Eingangswelle vorzugsweise mittels eines Wälzlagers in einer Bohrung der Ritzelwelle gelagert sein. Aus Platzgründen eignet sich dazu insbesondere ein Nadellager, welches in radialer Richtung nur geringe Abmessungen aufweist. Diese platzsparende Lageranordnung ermöglicht insgesamt kompakte Abmessungen des Radsatzgetriebes.

Zur Überwachung des Kupplungszustands kann das Radsatzgetriebe ferner einen Sensor umfassen. Im Hinblick auf einen zuverlässigen Betrieb des Schienenfahrzeugs ist es vorteilhaft jederzeit den aktuellen Kupplungszustand, das heißt aus- oder eingekuppelter Zustand, zu erfassen. Der Sensor ist bevorzugt als Wegsensor oder als Näherungsschalter ausgebildet und so im Bereich der Schiebemuffe angeordnet, dass er die axiale Position der Schiebemuffe erfasst. Das bedeutet, dass der Sensor die Schaltstellung der Schaltkupplung direkt an der Schiebemuffe erfasst, was die Zuverlässigkeit weiter erhöht. Es ist eine Vielzahl an Funktionsprinzipien von Wegsensoren und Näherungsschaltern bekannt, die sich grundsätzlich für den genannten Sensor eignen. Lediglich beispielhaft seien dazu induktive, kapazitive, magnetische oder optischen Sensoren bzw. Schalter erwähnt.

Das Radsatzgetriebe umfasst vorzugsweise ein Gehäuse, in dem die Schaltkupplung, die Ritzelwelle, das Kegelritzel und das Tellerrad angeordnet sind und in dem die Eingangswelle sowie die Radsatzwelle zumindest teilweise angeordnet sind. Das Gehäuse dient zum einen der Lagerung der Wellen und dem Abstützen der Kräfte und Drehmomente. Zum anderen schützt das Gehäuse die Bauteile und das Schmiermittel in seinem Innenraum vor äußeren Einflüssen wie Feuchtigkeit und Schmutz. Dazu kann das Gehäuse einen zumindest annähernd öldichten Innenraum aufweisen.

Im Folgenden wird die Erfindung näher erläutert anhand der in den nachfolgenden Figuren abgebildeten Ausführungsbeispiele.

Dabei zeigen die
- Fig. 1: eine perspektivische Ansicht eines Drehgestells mit einem erfindungsge-mäßen Radsatzgetriebe,
- Fig. 2: eine perspektivische Ansicht eines erfindungsgemäßen Radsatzgetriebes und
- Fig. 3: eine Schnittdarstellung des Radsatzgetriebes aus Fig. 2.

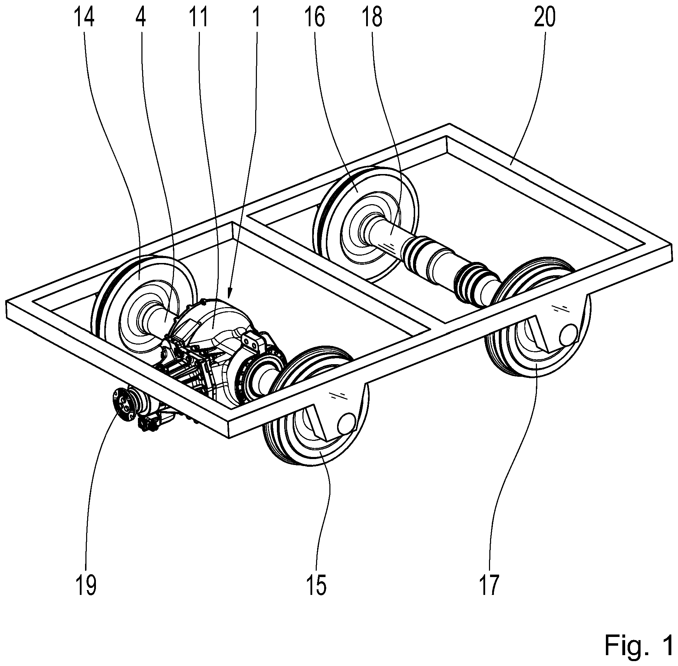

Die Fig. 1 zeigt ein Drehgestell 20 eines Schienenfahrzeugs mit einem Treibradsatz und mit einem nicht angetriebenen Radsatz, also einem Laufradsatz. Das Drehgestell 20 stützt sich jeweils außerhalb der Treibräder 14, 15 bzw. Laufräder 16, 17 an den Enden der Radsatzwellen 4 und 18 ab.

Der Treibradsatz besteht im Wesentlichen aus der Radsatzwelle 4 und den beiden darauf befestigten Treibrädern 14 und 15. Ein erfindungsgemäßes Radsatzgetriebe 1 mit einem Gehäuse 11 ist im mittleren Bereich der Radsatzwelle 4 auf dieser angeordnet. Das Radsatzgetriebe 1 dient in erster Linie dazu die Antriebsleistung, also ein Antriebsdrehmoment und eine Antriebsbewegung, von einer in Fahrtrichtung verlaufenden, nicht dargestellten Gelenkwelle auf die dazu rechtwinklig verlaufende Radsatzwelle 4 zu übertragen. Antriebsseitig kann das Radsatzgetriebe 1 über einen Gelenkwellenflansch 19 mit der Gelenkwelle verbunden werden, welche wiederum über ein Getriebe mit einem Antriebsmotor verbunden ist. Die vorliegende Antriebsanordnung kann beispielsweise von einem Verbrennungsmotor angetrieben werden.

Der Laufradsatz besteht im Wesentlichen aus einer weiteren Radsatzwelle 18 und zwei auf der weiteren Radsatzwelle 18 befestigten Laufrädern 16 und 17.

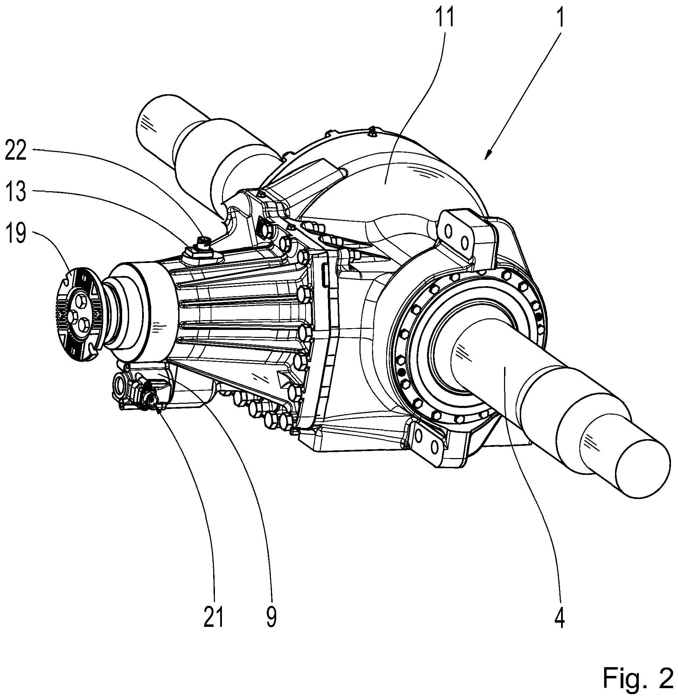

In der Fig. 2 ist das erfindungsgemäße Radsatzgetriebe 1 und die Radsatzwelle 4 ohne Drehgestell und Treibräder dargestellt. Das Radsatzgetriebe 1 weist ein mehrteiliges Gehäuse 11 auf, welches sich über nicht näher bezeichnete Lager auf der Radsatzwelle 4 abstützt. Die Radsatzwelle 4 durchdringt das Gehäuse 11 an zwei seitlichen Wellendurchführungen.

Außen an dem Gehäuse 11 ist ein Aktuator 9 zur Betätigung einer in dem Gehäuse 11 angeordneten Schaltkupplung 7 angeordnet. Eine Aktuatoranschlussstelle 21 ist von außen zugänglich angeordnet.

Auf einer dem Aktuator 9 gegenüberliegenden Seite des Gehäuses 11 ist ein Sensor 13 angeordnet. Der Sensor 13 dient der Überwachung des Kupplungszustands. Ein Teil des Sensors 13 ragt aus dem Getriebegehäuse 11 heraus, sodass eine an diesem Teil angeordnete Sensoranschlussstelle 22 von außen zugänglich ist. Dadurch ist der Sensor 13 von außen austauschbar, ohne das Getriebegehäuse 11 öffnen zu müssen.

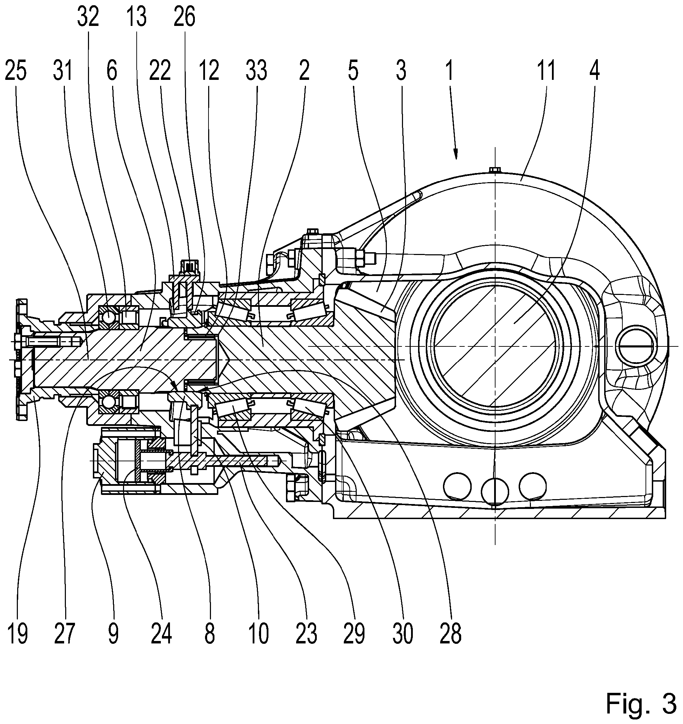

In der Schnittdarstellung der Fig. 3 ist das Radsatzgetriebe 1 mit einem starr auf einer Ritzelwelle 2 angeordneten Kegelritzel 3 und mit einem starr auf der Radsatzwelle 4 angeordneten Tellerrad 5 dargestellt. Das Kegelritzel 3 steht mit dem Tellerrad 5 im Eingriff, sodass die beiden ein Kegelradgetriebe bilden.

Koaxial zu der Ritzelwelle 2 ist eine Eingangswelle 6, und zwischen der Eingangswelle 6 und der Ritzelwelle 2 ist eine Schaltkupplung 7 angeordnet. Die Schaltkupplung 7 weist eine axial verschiebbare Schiebemuffe 8 auf, die koaxial zu der der Eingangswelle 6 und der Ritzelwelle 2 angeordnet ist. Die axialen und radialen Richtungsangaben in diesem Dokument beziehen sich auf die Ausrichtung der Rotationsachse 25 der Eingangswelle 6, sofern nicht ausdrücklich anders angegeben. Mithilfe der Schiebemuffe 8 sind die Eingangswelle 6 und die Ritzelwelle 2 miteinander mechanisch verbindbar und trennbar. Dazu weist die Schiebemuffe 8 eine Innenverzahnung auf, die mit jeweils einer Schaltverzahnung 27, 28 auf dem jeweils der Schiebemuffe 8 zugewandten Ende der Eingangswelle 6 und der Ritzelwelle 2 in Eingriff gebracht werden kann.

Zur Betätigung der Schiebemuffe 8 weist das Radsatzgetriebe 1 einen Aktuator 9 auf, der mittels eines Schaltelements 10 mit der Schiebemuffe 8 verbunden ist. Das Schaltelement 10 ist formschlüssig mit einer Kolbenstange 23 des als Druckzylinder ausgebildeten Aktuators 9 verbunden und wird deshalb bei den axialen Bewegungen des im Druckzylinder angeordneten Kolbens 24 mitgenommen. Das Schaltelement 10 ist als Schaltgabel ausgebildet, wobei die beiden Enden der Schaltgabelarme oder daran befestigte Gleitstücke in eine Umfangsnut 26 der Schiebemuffe 8 eingreifen. Der Aktuator 9 ist außen an dem Gehäuse 11 des Radsatzgetriebes 1 befestigt und das Schaltelement 10 erstreckt sich durch eine Öffnung in dem Gehäuse 11 in den Innenraum des Gehäuses 11, in dem die Schaltkupplung 7 angeordnet ist.

Die Eingangswelle 6 und die Ritzelwelle 2 sind in dem Gehäuse 11 gelagert. Zur Lagerung der Ritzelwelle 2 dienen zwei Kegelrollenlager 29, 30, welche in einer O-Anordnung angeordnet sind. Die Eingangswelle 6 stützt sich zum einen über zwei Wälzlager 31, 32 in dem Gehäuse 11 und zum anderen mittels eines weiteren Wälzlagers 12, das als Nadellager ausgebildet ist, in einer zentralen Bohrung 33 der Ritzelwelle 2 ab.

Schließlich umfasst das Radsatzgetriebe 1 einen Sensor 13 zur Überwachung des Kupplungszustands. Der Sensor 13 ist im Bereich der Schiebemuffe 8 an dem Gehäuse 11 befestigt. Er ragt durch eine Gehäusewand in den Innenraum des Gehäuses 11 hinein, sodass er die axiale Position der Schiebemuffe 8 erfassen kann. Eine Sensoranschlussstelle 22 ist von außen einfach zugänglich, sodass der Sensor 13 einfach angeschlossen und erforderlichenfalls einfach ausgetauscht werden kann.

### Bezuqszeichen

- 1: Radsatzgetriebe
- 2: Ritzelwelle
- 3: Kegelritzel
- 4: Radsatzwelle
- 5: Tellerrad
- 6: Eingangswelle
- 7: Schaltkupplung
- 8: Schiebemuffe
- 9: Aktuator
- 10: Schaltelement
- 11: Gehäuse
- 12: Wälzlager
- 13: Sensor
- 14: Treibrad
- 15: Treibrad
- 16: Laufrad
- 17: Laufrad
- 18: Radsatzwelle
- 19: Gelenkwellenflansch
- 20: Drehgestell
- 21: Aktuatoranschlussstelle
- 22: Sensoranschlussstelle
- 23: Kolbenstange
- 24: Kolben
- 25: Rotationsachse
- 26: Umfangsnut
- 27: Schaltverzahnung
- 28: Schaltverzahnung
- 29: Kegelrollenlager
- 30: Kegelrollenlager
- 31: Wälzlager
- 32: Wälzlager
- 33: Bohrung

## Patentansprüche

1. Radsatzgetriebe für ein Schienenfahrzeug, wobei das Radsatzgetriebe (1) ein starr auf einer Ritzelwelle (2) angeordnetes Kegelritzel (3) und ein starr auf einer Radsatzwelle (4) angeordnetes Tellerrad (5) aufweist, die miteinander im Eingriff sind, und wobei eine Antriebsleistung von der Ritzelwelle (2) über das Kegelritzel (3) und das Tellerrad (5) auf die Radsatzwelle (4) übertragbar ist, **dadurch gekennzeichnet, dass** das Radsatzgetriebe (1) eine koaxial zu der Ritzelwelle (2) angeordnete Eingangswelle (6) umfasst, und dass zwischen der Eingangswelle (6) und der Ritzelwelle (2) eine Schaltkupplung (7) angeordnet ist.

2. Radsatzgetriebe nach Anspruch 1, **dadurch gekennzeichnet, dass** die Schaltkupplung (7) eine axial verschiebbare Schiebemuffe (8) aufweist, mit der die Eingangswelle (6) und die Ritzelwelle (2) miteinander verbindbar sind.

3. Radsatzgetriebe nach Anspruch 2, **dadurch gekennzeichnet, dass** das Radsatzgetriebe (1) einen Aktuator (9) zur Betätigung der Schaltkupplung (7) umfasst, der mittels zumindest eines Schaltelements (10) mit der Schiebemuffe (8) verbunden ist.

4. Radsatzgetriebe nach Anspruch 3, **dadurch gekennzeichnet, dass** der Aktuator (9) außen an einem Gehäuse (11) des Radsatzgetriebes (1) befestigt ist.

5. Radsatzgetriebe nach einem der vorgenannten Ansprüche, **dadurch gekennzeichnet, dass** die Eingangswelle (6) an ihrem abtriebsseitigen Ende mittels eines Wälzlagers (12) in einer Bohrung (33) der Ritzelwelle (2) gelagert ist.

6. Radsatzgetriebe nach einem der vorgenannten Ansprüche, **dadurch gekennzeichnet, dass** das Radsatzgetriebe (1) einen Sensor (13) zur Überwachung des Kupplungszustands umfasst.

7. Radsatzgetriebe nach Anspruch 6, **dadurch gekennzeichnet, dass** der Sensor (13) als Wegsensor oder als Näherungsschalter ausgebildet und so im Bereich der Schiebemuffe (8) angeordnet ist, dass er die axiale Position der Schiebemuffe (8) erfasst.

8. Radsatzgetriebe nach einem der vorgenannten Ansprüche, **dadurch gekennzeichnet, dass** das Radsatzgetriebe (1) ein Gehäuse (11) umfasst, in dem die Schaltkupplung (7), die Ritzelwelle (2), das Kegelritzel (3) und das Tellerrad (5) angeordnet sind und in dem die Eingangswelle (6) sowie die Radsatzwelle (4) zumindest teilweise angeordnet sind.

## Claims

1. Wheelset transmission for a rail vehicle, the wheelset transmission (1) having a bevel pinion (3), which is arranged rigidly on a pinion shaft (2), and a ring gear (5), which is arranged rigidly on a wheelset shaft (4), which are in engagement with one another, and it being possible for a drive power to be transmitted from the pinion shaft (2) via the bevel pinion (3) and the ring gear (5) to the wheelset shaft (4), **characterized in that** the wheelset transmission (1) comprises an input shaft (6) which is arranged coaxially with respect to the pinion shaft (2), and **in that** a shifting clutch (7) is arranged between the input shaft (6) and the pinion shaft (2).

2. Wheelset transmission according to Claim 1, **characterized in that** the shifting clutch (7) has an axially displaceable slider sleeve (8), by way of which the input shaft (6) and the pinion shaft (2) can be connected to one another.

3. Wheelset transmission according to Claim 2, **characterized in that** the wheelset transmission (1) comprises an actuator (9) for actuating the shifting clutch (7), which actuator (9) is connected by means of at least one shifting element (10) to the slider sleeve (8) .

4. Wheelset transmission according to Claim 3, **characterized in that** the actuator (9) is fastened on the outside to a housing (11) of the wheelset transmission (1) .

5. Wheelset transmission according to one of the preceding claims, **characterized in that** the input shaft (6) is mounted at its output-side end in a bore (33) of the pinion shaft (2) by means of an anti-friction bearing (12) .

6. Wheelset transmission according to one of the preceding claims, **characterized in that** the wheelset transmission (1) comprises a sensor (13) for monitoring the clutch state.

7. Wheelset transmission according to Claim 6, **characterized in that** the sensor (13) is configured as a displacement sensor or as a proximity switch and is arranged in the region of the slider sleeve (8) in such a way that it detects the axial position of the slider sleeve (8).

8. Wheelset transmission according to one of the preceding claims, **characterized in that** the wheelset transmission (1) comprises a housing (11), in which the shifting clutch (7), the pinion shaft (2), the bevel pinion (3) and the ring gear (5) are arranged, and in which the input shaft (6) and the wheelset shaft (4) are arranged at least partially.

## Revendications

1. Transmission d'essieu monté pour un véhicule ferroviaire, la transmission d'essieu monté (1) présentant un pignon conique (3) disposé de manière rigide sur un arbre de pignon (2) et une couronne dentée (5) disposée de manière rigide sur un arbre d'essieu monté (4) qui sont en prise l'un avec l'autre, et dans lequel une puissance motrice peut être transmise de l'arbre de pignon (2) par l'intermédiaire du pignon conique (3) et de la couronne dentée (5) à l'arbre d'essieu monté (4),
**caractérisée en ce que** la transmission d'essieu monté (1) comprend un arbre d'entrée (6) disposé coaxialement par rapport à l'arbre de pignon (2), et **en ce qu'**un embrayage (7) est disposé entre l'arbre d'entrée (6) et l'arbre de pignon (2).

2. Transmission d'essieu monté selon la revendication 1, **caractérisée en ce que** l'embrayage (7) présente un manchon coulissant (8) axialement mobile qui permet de relier l'arbre d'entrée (6) et l'arbre de pignon (2) l'un à l'autre.

3. Transmission d'essieu monté selon la revendication 2, **caractérisée en ce que** la transmission d'essieu monté (1) comprend un actionneur (9) pour actionner l'embrayage (7) qui est relié au manchon coulissant (8) au moyen d'au moins un élément de commutation (10).

4. Transmission d'essieu monté selon la revendication 3, **caractérisée en ce que** l'actionneur (9) est fixé à l'extérieur à un carter (11) de la transmission d'essieu monté (1).

5. Transmission d'essieu monté selon l'une quelconque des revendications précédentes, **caractérisée en ce que** l'arbre d'entrée (6) est monté à son extrémité côté sortie dans un alésage (33) de l'arbre de pignon (2), au moyen d'un palier à roulement (12).

6. Transmission d'essieu monté selon l'une quelconque des revendications précédentes, **caractérisée en ce que** la transmission d'essieu monté (1) comprend un capteur (13) pour surveiller l'état d'embrayage.

7. Transmission d'essieu monté selon la revendication 6, **caractérisée en ce que** le capteur (13) est réalisé sous forme de capteur de déplacement ou de capteur de proximité et est disposé au niveau du manchon coulissant (8) de telle sorte qu'il détecte la position axiale du manchon coulissant (8).

8. Transmission d'essieu monté selon l'une quelconque des revendications précédentes, **caractérisée en ce que** la transmission d'essieu monté (1) comprend un carter (11) dans lequel l'embrayage (7), l'arbre de pignon (2), le pignon conique (3) et la couronne dentée (5) sont disposés et dans lequel l'arbre d'entrée (6) ainsi que l'arbre d'essieu monté (4) sont disposés au moins partiellement.
